# EUROPEAN PATENT APPLICATION

(11) **EP 4 671 925 A1**
(43) Date of publication of application: **31.12.2025**
(21) Application number: 24205533.3
(22) Date of filing: 09.10.2024
(51) Int. Cl.: G06F 3/01, G06N 3/006

(54) **IMMERSIVE VIRTUAL LOCATION CREATION USING GENERATIVE ARTIFICIAL INTELLIGENCE**

(30) Priority: 27.06.2024 US 202418756098
(71) Applicant: SAP SE, 69190 Walldorf (DE)
(72) Inventor: SCHIRMER, Oliver, 69190 Walldorf (DE); FEINBUBE, Frank, 69190 Walldorf (DE); SCHNEIDER, Max, 69190 Walldorf (DE)
(74) Representative: Müller-Boré & Partner Patentanwälte PartG mbB

(57) **Abstract**

A system associated with an immersive experience framework may include an immersive virtual location data store containing information about a plurality of three-dimensional scenes (with each scene being associated with an immersive virtual location). An immersive virtual location tool may receive, from a creator, an immersive virtual location request (e.g., including an environment description). A request prompt is created based on the environment description and transmitted to a text-to-video generative AI model. A video of the virtual location is received from the generative AI model and converted into a three-dimensional scene using a volume rendering technique. Information about the scene is stored in the immersive virtual location data store and a user can interact with the scene using a substantially real-time experience interaction engine. In some embodiments, a JSON file describing the scene is directly generated using a LLM without creating the video.

## Description

### BACKGROUND

An enterprise may want to create an immersive virtual location (*e.g.,* a three-dimensional interactive environment) for a number of reasons. For example, a business might want to create an immersive virtual location to train or evaluate employees. Manually creating such an immersive virtual location, however, can be a time consuming and expensive task, especially when there are a substantial number of locations, characters, and use cases (*e.g.,* various objects and characters may need to be generated and located within the environment, story lines and scripts may need to be generated, *etc.*)*.* Moreover, existing methods for creating these environments may not be sufficiently immersive to facilitate effective learning and recall or to provide a realistic context for training or simulation. In addition, there is a need for a system that allows for the automated and repeatable creation of these environments (tailored according to the specific requirements of the scenario at hand). Existing solutions may be overly generic, not customizable, or inefficient in terms of the time and resources required for creation.

Moreover, the development, implementation, and maintenance of high-quality, immersive virtual environments can be expensive and resource intensive. There is a need for a more cost-effective solution that still delivers high-quality results. Another challenge is the inherent limitation of real-world physics. Current systems may not be able to accurately represent or adapt to the unique physical rules of different virtual environments, limiting the range of possible scenarios and experiences. Further, the issue of shareability may be a concern. Current solutions may not support the easy sharing of virtual environments among creators and users (limiting their accessibility and usefulness).

It would therefore be desirable to provide an immersive virtual location tool within an immersive experience framework in a secure, automatic, and efficient manner.

### SUMMARY

According to some embodiments, methods and systems associated with an immersive experience framework may include an immersive virtual location data store that contains information about a plurality of three-dimensional scenes (with each three-dimensional scene being associated with an immersive virtual location). An immersive virtual location tool may receive, from a creator, an immersive virtual location request (*e.g.,* including an environment description of a virtual location). A request prompt may then be automatically created based on the environment description and transmitted to a text-to-video generative artificial intelligence model. A video of the virtual location is received from the text-to-video generative artificial intelligence model and converted into a three-dimensional scene using a volume rendering technique. Information about the three-dimensional scene is stored in the immersive virtual location data store and it is arranged for a user to interact with the three-dimensional scene using a substantially real-time experience interaction engine. In some embodiments, a JSON describing the scene is directly generated using a LLM without creating the video.

Some embodiments comprise: means for receiving, by a computer processor of an immersive virtual location tool from a creator, an immersive virtual location request including an environment description of a virtual location; means for automatically creating a request prompt based on the environment description; means for dynamically refining the request prompt via interactions with the creator; means for transmitting the request prompt to a text-to-video Large Language Model ("LLM"); means for receiving, from the text-to-video LLM, a video of the virtual location; means for converting the video of the virtual location into a three-dimensional scene using a volume rendering technique associated with Gaussian splatting; means for storing information about the three-dimensional scene in an immersive virtual location data store, wherein the immersive virtual location data store contains information about a plurality of three-dimensional scenes, each three-dimensional scene being associated with an immersive virtual location; and means for arranging for a user to interact with the three-dimensional scene using a substantially real-time experience interaction engine.

Some technical advantages of some embodiments disclosed herein are improved systems and methods to provide an immersive virtual location tool within an immersive experience framework in a secure, automatic, and efficient manner.

### BRIEF DESCRIPTION OF THE DRAWINGS

FIG. 1 is a high-level immersive experience framework architecture in accordance with some embodiments.
FIG. 2 is a method according to some embodiments.
FIGS. 3A and 3B are overall workflows in accordance with some embodiments.
FIG. 4 shows high level system components according to some embodiments.
FIG. 5 is an immersive environment in accordance with some embodiments.
FIG. 6 is a method according to some embodiments.
FIG. 7 is a more detailed example of system components in accordance with some embodiments.
FIG. 8 illustrates experience services according to some embodiments.
FIG. 9 is a runtime method in accordance with some embodiments.
FIG. 10 illustrates persistency elements according to some embodiments.
FIG. 11 is a persistency method in accordance with some embodiments.
FIG. 12 illustrates immersion elements according to some embodiments.
FIG. 13 is an immersion method in accordance with some embodiments.
FIG. 14 illustrates some examples of use cases according to some embodiments.
FIG. 15 is another overall workflow in accordance with some embodiments.
FIG. 16 is a training example of system components according to some embodiments.
FIG. 17 is an apparatus or platform according to some embodiments.
FIG. 18 is a portion of an immersive virtual location database in accordance with some embodiments.
FIG. 19 illustrates a tablet computer immersive virtual location display according to some embodiments.
FIG. 20 is an immersive virtual location tool operator or administrator display in accordance with some embodiments.

### DETAILED DESCRIPTION

In the following detailed description, numerous specific details are set forth in order to provide a thorough understanding of embodiments. However, it will be understood by those of ordinary skill in the art that the embodiments may be practiced without these specific details. In other instances, well-known methods, procedures, components and circuits have not been described in detail so as not to obscure the embodiments.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

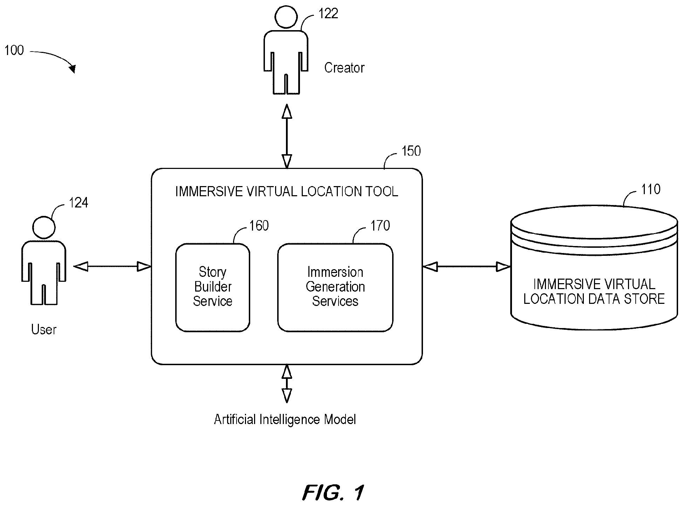

FIG. 1 is a high-level block diagram of one example of an immersive experience framework 100 architecture according to some embodiments. In particular, an immersive virtual location tool 150 may access information about a plurality of three-dimensional scenes (*e.g.,* each three-dimensional scene being associated with an immersive virtual location) from an immersive virtual location data store 110. The immersive virtual location tool 150 may then use a story builder service 160 and immersion generation services 170 in combination with a artificial intelligence model to create or modify an immersive experience in response to a request from a creator 122. The experience may then be provided to one or more users 124 (*e.g.,* to train or evaluate employees). According to some embodiments, a remote operator or administrator device may be used to configure or otherwise adjust the framework 100.

As used herein, devices, including those associated with the framework 100 and any other device described herein, may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless Application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

The immersive virtual location tool 150 may store information into and/or retrieve information from various data stores (*e.g.,* the immersive virtual location data store 110), which may be locally stored or reside remote from the immersive virtual location tool 150. Although a single immersive virtual location tool 150 is shown in FIG. 1, any number of such devices may be included. Moreover, various devices described herein might be combined according to embodiments of the present invention. For example, in some embodiments, the immersive virtual location data store 110 and the immersive virtual location tool 150 might comprise a single apparatus. The framework 100 functions may be performed by a constellation of networked apparatuses, such as in a distributed processing or cloud-based architecture. In some cases, the immersive virtual location tool 150 may process information associated with a number of different enterprises.

The enterprise may access the framework 100 via a remote device (*e.g.,* a Personal Computer ("PC"), tablet, or smartphone) to view information about and/or manage operational information in accordance with any of the embodiments described herein. In some cases, an interactive Graphical User Interface ("GUI") display may let an operator or administrator define and/or adjust certain parameters via a remote device (*e.g.,* to specify how the tool 150 connects with an enterprise computing environment infrastructure) and/or provide or receive automatically generated recommendations, alerts, summaries, or results associated with the framework 100.

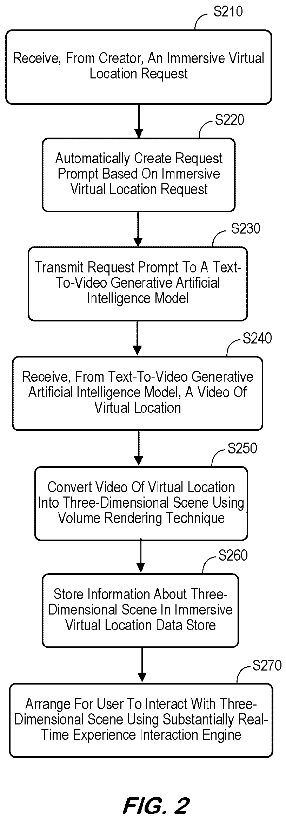

FIG. 2 is a method that might be performed by some or all of the elements of the framework 100 described with respect to FIG. 1. The flow charts described herein do not imply a fixed order to the steps, and embodiments of the present invention may be practiced in any order that is practicable. Note that any of the methods described herein may be performed by hardware, software, or any combination of these approaches. For example, a computer-readable storage medium may store thereon instructions that when executed by a machine result in performance according to any of the embodiments described herein.

At S210, an immersive virtual location request is received from a creator. In some embodiments, the immersive virtual location request includes an environment description of a virtual location. As used herein, the phrase "virtual location" may refer to an interactive, three-dimensional environment that may be experienced by a user (*e.g.,* in connection with a computer display, a virtual reality device, augmented reality glasses, *etc.).* According to some embodiments, the immersive virtual location request includes information about a room description, a physics description (*e.g.,* how objects should move or interact), a style suggestion (*e.g.,* an office or school environment), a user goal (*e.g.,* making a sale or evaluating a medical condition), a character in the virtual location, *etc.* The immersive virtual location request received from the creator might be associated with, for example, a text request, an audio request (*e.g.,* a spoken description of a location), an image request (*e.g.,* a location that looks similar to this picture), a video request (*e.g.,* the character should move in this fashion), *etc.*

At S220, the system may automatically create a request prompt. The request prompt might be based on, for example, an environment description or information inferred from a scenario (*e.g.,* "a location suitable where a doctor will talk with a patient"). According to some embodiments, the immersive virtual location tool dynamically refines the request prompt via interactions with the creator. At S230, the request prompt is transmitted to a text-to-video generative artificial intelligence model. In some embodiments, the generative artificial intelligence model is "multimodal." As used herein, the term "multimodal" may refer to a type of deep learning using a combination of various modalities of data (such as text, audio, or images) to create a robust model of real-world phenomena. Text-to-image/video models are - when using the word literally - inherently "multimodal," but when talking about artificial intelligence "multimodal" may signify the existence of further (mostly input) modalities that the model supports. As used herein, the phrase "generative artificial intelligence" may refer to models that capable of generating text, images, videos, or other data by learning patterns and structure of the input training data and the generating new data that has similar characteristics. In some embodiments, the text-to-video model comprises a text-to-image model followed by an image-to-video model. Moreover, the multimodal generative artificial intelligence model might comprise a computational model able to achieve general-purpose language generation and other natural language processing tasks such as a Large Language Model ("LLM").

At S240, the system may receive, from the text-to-video generative artificial intelligence model, a video of the virtual location. At S250, the video of the virtual location is converted into a three-dimensional scene using a volume rendering technique. For example, the volume rendering technique might be associated with Gaussian splatting that directly renders volume data without converting the data into surface or line primitives. Three-dimensional Gaussians can then be converted into meshes enabling simulation physics.

At S260, the system may store information about the three-dimensional scene in an immersive virtual location data store. The stored information about the three-dimensional scene might include, for example, a Java Script Object Notation ("JSON") file containing virtual environment locations, virtual environment dimensions, virtual environment mesh references, *etc.* At S270, it may be arranged for a user to interact with the three-dimensional scene using a substantially real-time experience interaction engine such as the UNREAL ENGINE^{®}. The immersive virtual location tool may be, according to some embodiments associated with a training use case, an educational use case, a public speaking use case, a sales simulation use case, an entertainment use case, *etc.* The information about the three-dimensional scene in the immersive virtual location data store might be sharable with a plurality of creators. Similarly, the information about the three-dimensional scene in the immersive virtual location data store might be sharable with a plurality of users.

In this way, embodiments may help create immersive virtual environments that can be used for various scenarios such as training and simulation. Existing methods for creating these environments may not be sufficiently immersive to facilitate effective learning and recall, or to provide a realistic context for training or simulation. Moreover, the system may allow for the automated and repeatable creation of these environments, tailored according to the specific requirements of the scenario at hand. Note that existing solutions may be overly generic, not customizable, or inefficient in terms of the time and resources required for creation. Embodiments may leverage multiple Generative Artificial Intelligence ("GenAI") models to create immersive, customizable, and shareable virtual environments.

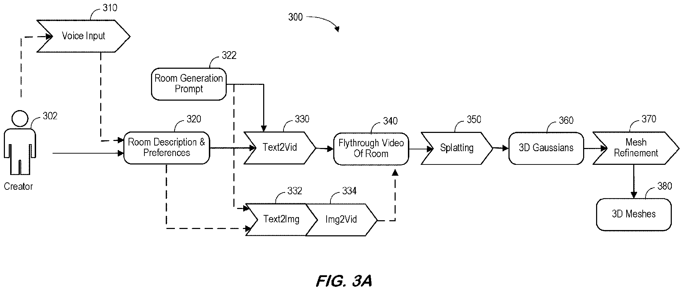

FIG. 3A is an overall workflow 300 in accordance with some embodiments. A creator 302 may provide a room description and preferences 320 (*e.g.,* "a modern doctor's office with an X-ray machine" or "a medium size classroom"). In some embodiments, the room description and preferences 320 may be provided via a voice input 310. The room description and preferences 320 and a room generation prompt 322 may then be used to create an immersive virtual environment. In this way, embodiments may begin with the optimization of a specific prompt using prompt engineering (*e.g.,* to structure an instruction that can be interpreted and understood by a generative artificial intelligence model). The prompt may be dynamic and based on user input (text or voice), which can include room or scene descriptions, style hints, and additional wishes.

A text-to-video converter 330 ("Text2Vid") converts the creator's request into a flythrough video of a room 340. According to some embodiments, the flythrough video of the room 340 is created via a text-to-image converter 332 ("Text2Img") followed by an image-to-video converter 334 ("Img2Vid"). That is, the optimized prompt is then sent to a state-of-the-art text-to-video model. The models may be selected based on an ability to generate temporally and content-wise coherent, high-quality flythrough videos of a room or scene described in the prompt.

The resulting video is then converted into a three-dimensional scene using novel techniques such as Gaussian splatting 350. The splatting 350 may, for example, integrate sparse points representing scenes with three-dimensional Gaussians 360 that retain properties of continuous volumetric radiance fields. Furthermore, the three-dimensional Gaussians 360 can optionally be converted into three-dimensional meshes 380 via mesh refinement 370. This enables simulation physics and interactions, thereby further enhancing the realism of a virtual environment and facilitating effective learning and recall by users.

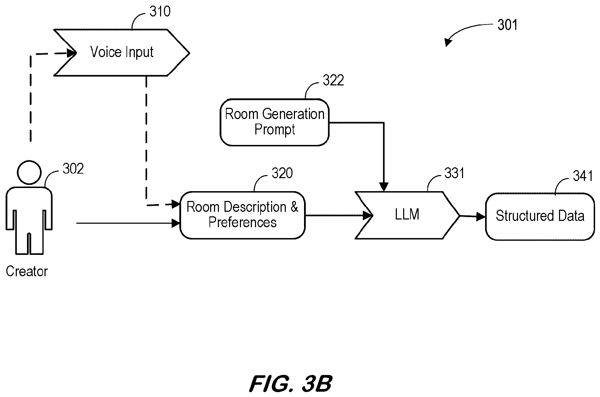

In this way, the embodiment shown in FIG. 3A takes a flow request and converts it into a video which is then used to create the three-dimensional scene. FIG. 3B is an overall workflow 301 in accordance with another embodiment. As before, a creator 302 may provide a room description and preferences 320, either directly or via a voice input 310. The room description and preferences 320 and a room generation prompt 322 may then be used by a LLM 331 to convert the creator's request into structured data 341. The structured data 341 may, for example, include information about a three-dimensional location, such as a JSON file that contains information about virtual environment locations, virtual environment dimensions, virtual environment mesh references, *etc.* The structured data 341 can then be converted into a three-dimensional scene to create an immersive virtual environment. That is, the workflow 301 uses an enhanced prompt to have Generative Artificial Intelligence ("genAI") create a description of the scene in a structured format (*e.g.,* a JSON file) and then uses this format to create the scene. For example, the structured format data might be used to select pre-existing three-dimensional objects that already exist (which might require morphing these objects such that they have the right dimensions). As another approach, the structured format data and other dedicated genAI services might instead be used to create three-dimensional objects on the fly (and then place those according to the format). In this way, the workflow request is turned into structured data describing a scene which is then used to generate the three-dimensional scene.

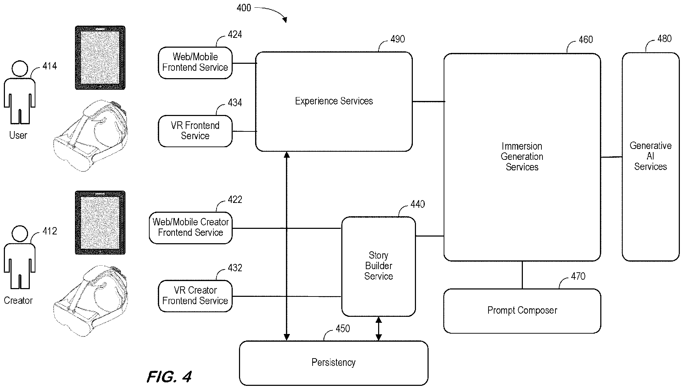

FIG. 4 shows high level system 400 components according to some embodiments. Initially, a creator 412 (*e.g.,* an immersive experience designer) uses a web/mobile creator frontend service 422 and/or a virtual reality ("VR") creator frontend service 432 to interact with a story builder service 440. The story builder service 440 may, for example, be used by the creator 412 to define a location, establish elements of a virtual agent's story (*e.g.,* interview a potential employee), *etc.* and store information into persistency 450 (*e.g.,* a training plan). The story building service 440 interacts with immersion generation services 460 that work with a prompt composer 470 and generative Artificial Intelligence ("AI") services 480. A user 414 (*e.g.,* an employee of an enterprise) may then utilize a web/mobile frontend service 424 and/or a VR frontend service 434 to access experience services 490 based on information in the persistency 450 to experience and interact with the virtual location requested by the creator 412.

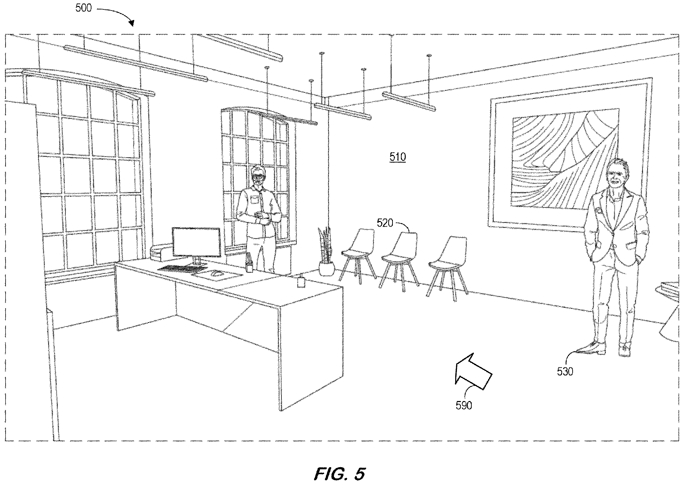

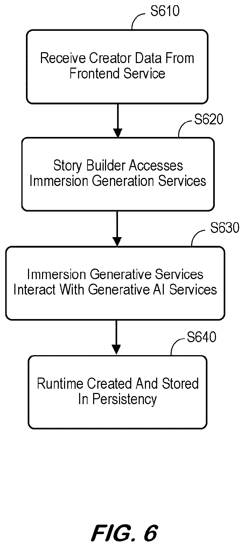

For example, FIG. 5 is an immersive environment 500 in accordance with some embodiments. The environment 500 might include a three-dimensional room 510 with furniture 520 and virtual agents or characters 530 that a user can interact with (*e.g.,* via voice, eye movement, a touchscreen or computer mouse pointer 590, *etc.*)*.* FIG. 6 is a method that may be used to create such a room 510 according to some embodiments. At S610, the system receives data from a creator via a frontend service. S620, a story builder may access immersive generation services that interact with generative AI services at S630. In this way, a runtime is created at S640 and stored in persistence for later retrieval by users.

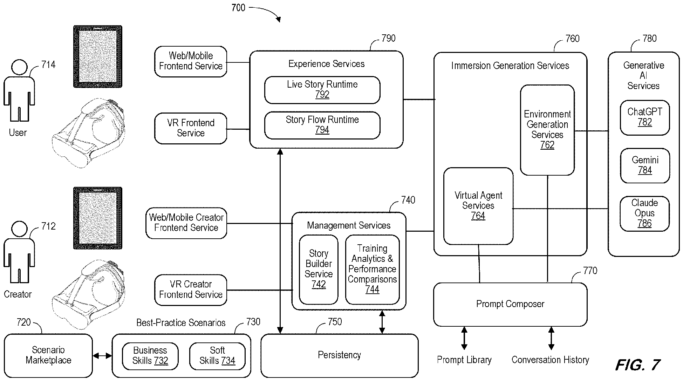

FIG. 7 is a more detailed example of system 700 components in accordance with some embodiments. As before, a creator 712 (*e.g.,* an immersive experience designer) uses a web/mobile creator frontend service and/or a virtual reality ("VR") creator frontend service to interact with a scenario marketplace 720 to share or retrieve information about other virtual experiences that have been created. The scenario marketplace 720 may in turn access best practice scenarios 730, such as those for business skills 732 (*e.g.,* a sales pitch, compliance, security, decision making, *etc.*) and/or soft skills 734 (*e.g.* public speaking). The frontend services may also exchange information with management services 740. The management services 740 might include, for example, a story builder service 742 and training analytics and performance comparisons 744. The story builder service 742 may, for example, be used by the creator 712 to define a location, establish elements of a virtual agent's story (*e.g.,* conduct a sales pitch for an imaginary product), *etc.* and store information into persistency 750. The story building service 740 interacts with immersion generation services 760 that work with a prompt composer 770 and generative AI services 780. According to this embodiment, the immersion generation services 760 include virtual agent services 764 (*e.g.,* to create and manage characters in the virtual location) and environment generation services 762 (*e.g.,* to interact with prompt composer 770 along with a prompt library and conversation history information). The virtual agent services 764 and environment generation services 764 utilize the generative AI services 780, such as services associated with an OPENAI^{™} CHATGPT^{®} 782 model, a GOOGLE^{™} GEMINI^{®} 784 model, an ANTHROPIC^{™} CLAUDE OPUS^{®} 786 model, *etc.* A user 714 may then utilize a web/mobile frontend service and/or a VR frontend service to access experience services 790 based on information in the persistency 750 to experience and interact with the virtual location requested by the creator 712. The experience services 790 may include a live story runtime 792 (*e.g.,* to generate on-the-fly interactions), a story flow runtime 794 (*e.g.,* to help the user 714 achieve a goal that was specified by the creator 712), *etc.*

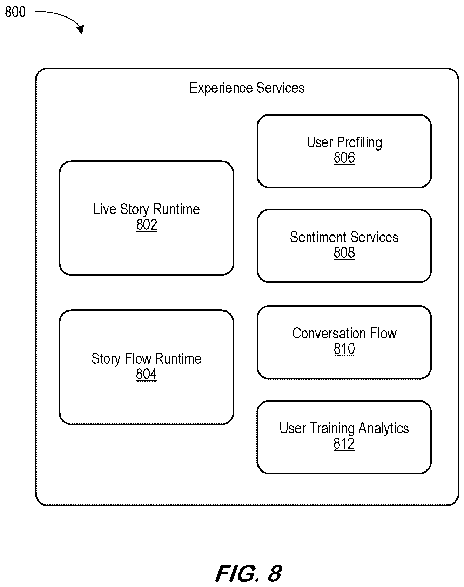

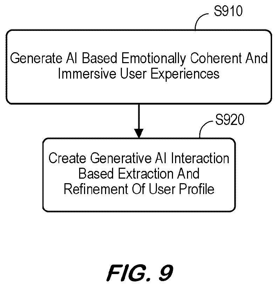

FIG. 8 is an illustration 800 of experience services according to some embodiments. The elements may include a live story runtime 802 (*e.g.,* to create on-the-fly virtual locations interactions in substantially real time), a story flow runtime 804 (*e.g.,* to provide expert based generation and refinement of training and entertainment stories), user profiling 806 (*e.g.,* to provide generative AI interaction based extraction and refinement of a user profile), sentiment services 808 (*e.g.,* to provide AI based emotionally coherent and immersive user experiences), a conversation flow 810 (*e.g.,* to generate realistic interactive dialog in substantially real time), user training analytics 812 (*e.g.,* to assess user performance), *etc.* FIG. 9 is a runtime method in accordance with some embodiments. At S910, the system may generate AI based emotionally coherent and immersive user experiences (*e.g.,* to help a doctor learn how to effectively interact with patients). At S920, the system creates generative AI interaction based extraction and refinement of a user profile (*e.g.,* has the user achieved the training goal?).

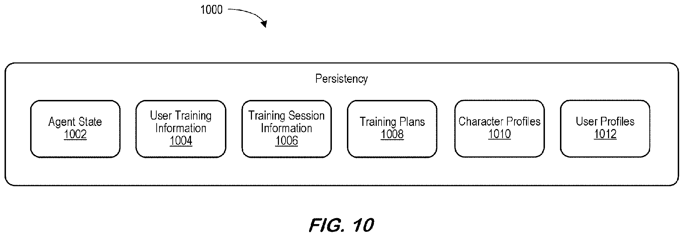

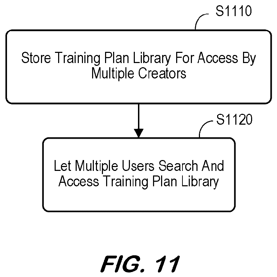

FIG. 10 is an illustration 1000 of persistency elements according to some embodiments. The elements may include an agent state 1002 (*e.g.,* to keep track of virtual characters), user training information 1004 (*e.g.,* to maintain a user's overall training history, performance ratings, user feedback, *etc.*), training session information 1006 (*e.g.,* so that a user may pause an experience and return to it later), training plans 1008 (*e.g.,* to store plans to be shared with other creators and/or users), character profiles 1010 (*e.g.,* to store information about the state of a virtual character in a scenario), user profiles 1012 (*e.g.,* to store user preferences or contact information), *etc.* FIG. 11 is a persistency method in accordance with some embodiments. At 51110, the system may store a training plan library of access by multiple creators. For example, a second creator might want to generate a virtual room similar to one that had previously been generated by a first creator. In this case, the second creator might access the library and make whatever adjustments are appropriate. At S 1120, multiple users may search and access the training plan library. For example, employees in software programming group might ask to see a list of interactive experiences that can be used to learn a new programming language.

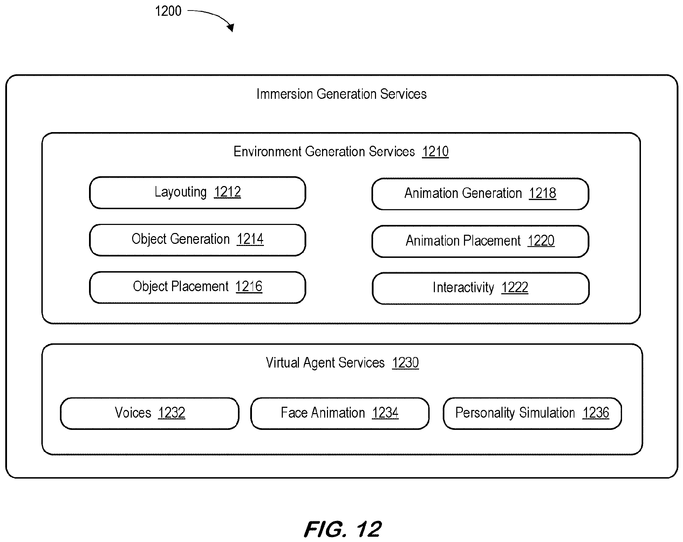

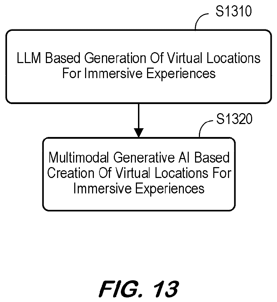

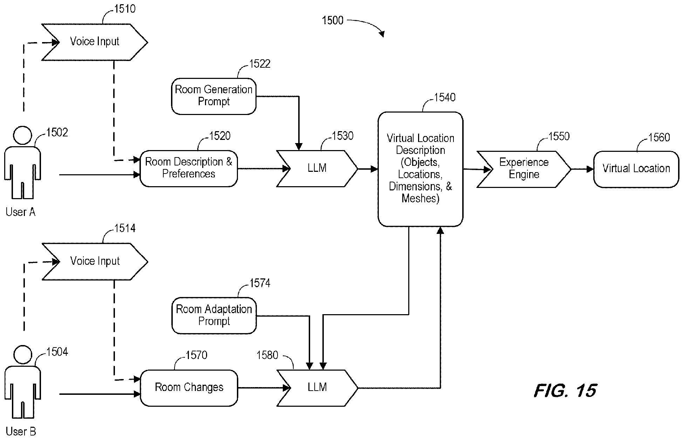

FIG. 12 is an illustration 1200 of immersion elements according to some embodiments. The elements may include environment generation services 1210 that provides LLM based and/or multimodal generative AI based generation of virtual locations for immersive experiences. The environment generation services 1210 might include, for example, layouting 1212 (*e.g.,* to place create a map of offices in a suite), object generation 1214 (*e.g.,* to create object dimensions, textures, colors, behaviors, *etc.*), object placement 1216 (*e.g.,* to place furniture in a virtual office), animation generation 1218 (*e.g.,* to provide hand movements), animation placement 1220 (*e.g.*, to have a character walk from one location to another, sit down, or perform an action), interactivity 1222 (e.g., to facilitate interactions between characters and/or objects), *etc.* The elements may further include virtual agent services 1230 with voices 1232 (*e.g.,* to let virtual agents speak with users), face animation 1234 (*e.g.,* to provide realistic agent facial expressions), personality simulation 1236 (*e.g.,* to make a virtual agent appear as helpful, confused, or afraid), *etc.* FIG. 13 is an immersion method in accordance with some embodiments. At S1310, the system may provide LLM based generation of virtual location for immersive experiences (*e.g.,* as described in connection with FIG. 15). At S1320, the system may provide multimodal generative AI based creation of virtual locations for immersive experiences (*e.g.,* as described in connection with FIG. 3A or 3B).

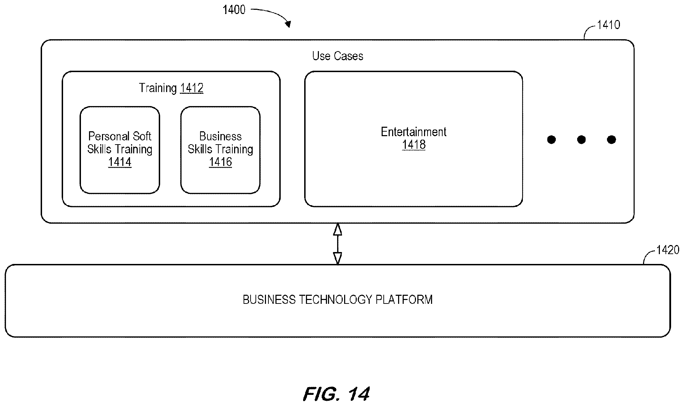

FIG. 14 is an illustration 1400 of some examples of use cases 1410 according to some embodiments. The use cases 1410 may interact with a business technology platform 1430 to extend and personalize applications, integrate and connect landscapes, and/or unleash business users to connect processes and experiences, make decisions with confidence, and drive business innovation. The use cases 1410 might be associated with, for example, training 1412 and entertainment 1418 (*e.g.,* to create movies or video games), *etc.* The training 1412 might include, for example, personal soft skills training 1414 (*e.g.,* becoming comfortable with public speaking, learning a new hobby, creating a video message for a special occasion, *etc.*) and/or business skills training 1416 (*e.g.,* sales simulation, learning programming, improving decision making, talking with employees, learning a new role, *etc.*).

Some embodiments described herein leverage a LLM to generate immersive virtual environments based on descriptions. For example, FIG. 15 is another overall workflow 1500 in accordance with some embodiments. Initially, user A 1502 provides a room description and preferences 1520. The room description and preferences 1520 may be provided to a LLM 1530 along with a room generation prompt 1522. The system may use specific prompts that are optimized through prompt engineering to guide the LLM 1530 in the generation of the desired virtual environment. The prompts may be dynamic and can be adjusted based on user input (allowing for customization of the virtual environment according to the user's requirements). For example, the user input may include room or scene descriptions, style hints, and additional wishes. According to some embodiments, a voice input 1510 may convert a request from user A 1502 into text. The LLM 1530 can then generate a virtual location description 1540 (*e.g.,* including objects, locations, dimensions, and meshes) which is used by an experience engine 1550 to create an appropriate virtual location 1560. For example, the LLM 1530 may generate structured data in a Java-Script Object Notation ("JSON") format. Subsequently, user B 1504 may provide room changes 1570 which, along with a room adaptation prompt 1574, is transmitted to another LLM 1580 (*e.g.,* voice input 1514 may again be supported). In this way, generated virtual locations 1560 can be refined using subsequent prompts in a chat-like manner to address specific refinement and details. The generated structured data is then parsed and rendered into an immersive three-dimensional scene using experience engines (such as the UNREAL ENGINE^{®}). Note that the use of structured data enables easy sharing of these virtual environments among users. Users can simply share the structured data, which can then be rendered into the same three-dimensional scene on a different device (thereby addressing the problem of shareability). In addition, by leveraging the capabilities of experience engines, the system can accurately represent and adapt to unique physical rules of different virtual environments and overcome the limitations of real-world physics (*e.g.,* by changing the speed of time, jumping through time and locations, supporting "magic like" interactions such as object transformations, *etc.*).

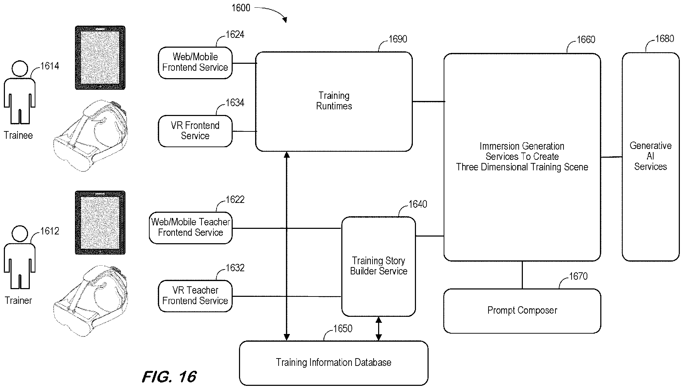

FIG. 16 is a training example of system 1600 components according to some embodiments. As before, the system 1600 may receive a request from a trainer 1612 via a web/mobile teacher frontend service 1622 and/or a VR teacher frontend service 1632 and interact with a training story builder service 1640. The training story builder service 1640 may, for example, be used by the trainer 1612 to define a location, establish elements of a virtual agent's story, *etc.* and store the results into a training information database 1650 (*e.g.,* a training plan). The training story building service 1640 interacts with immersion generation services 1660 that work with a prompt composer 1670 and generative AI services 1680. A trainee 1614 may then utilize a web/mobile frontend service 1624 and/or a VR frontend service 1634 to access training experience services 1690 based on the training information database 1650 to experience and interact with the virtual location requested by the trainer 1612.

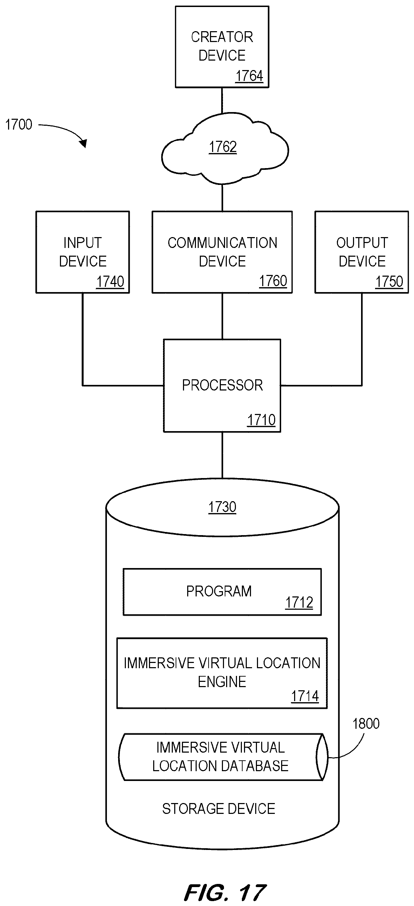

Note that the embodiments described herein may be implemented using any number of different hardware configurations. For example, FIG. 17 is a block diagram of an apparatus or platform 1700 that may be, for example, associated with the framework 100 of FIG. 1 (and/or any other system described herein). The platform 1700 comprises a processor 1710, such as one or more commercially available Central Processing Units ("CPUs") in the form of one-chip microprocessors, coupled to a communication device 1760 configured to communicate via a communication network 1762. The communication device 1760 may be used to communicate, for example, with one or more creator devices 1764 via a distributed computer network 1762. The platform 1700 further includes an input device 1740 (*e.g.,* a computer mouse and/or keyboard to input location information, object descriptions, *etc.)* and/an output device 1750 (*e.g.,* a computer monitor to render a display, transmit recommendations, charts, alerts, and/or reports about immersive virtual location results, *etc.).*

The processor 1710 also communicates with a storage device 1730. The storage device 1730 may comprise any appropriate information storage device, including combinations of magnetic storage devices (*e.g.,* a hard disk drive), optical storage devices, mobile telephones, and/or semiconductor memory devices. The storage device 1730 stores a program 1712 and/or immersive virtual location engine 1714 for controlling the processor 1710. The processor 1710 performs instructions of the programs 1712, 1714, and thereby operates in accordance with any of the embodiments described herein. For example, the processor 1710 may receive, from a creator, an immersive virtual location request including an environment description of a virtual location. A request prompt may then be automatically created by the processor 1710 based on the environment description and transmitted to a text-to-video multimodal generative artificial intelligence model. A video of the virtual location is received from the text-to-video multimodal generative artificial intelligence model and converted by the processor 1710 into a three-dimensional scene using a volume rendering technique. Information about the three-dimensional scene is stored in the immersive virtual location data store, and it is arranged for a user to interact with the three-dimensional scene using a substantially real-time experience interaction engine. In some embodiments, a JSON describing the scene is directly generated using a LLM without creating the video.

The programs 1712, 1714 may be stored in a compressed, uncompiled and/or encrypted format. The programs 1712, 1714 may furthermore include other program elements, such as an operating system, clipboard application, a database management system, and/or device drivers used by the processor 1710 to interface with peripheral devices.

As used herein, information may be "received" by or "transmitted" to, for example: (i) the platform 1700 from another device; or (ii) a software application or module within the platform 1700 from another software application, module, or any other source.

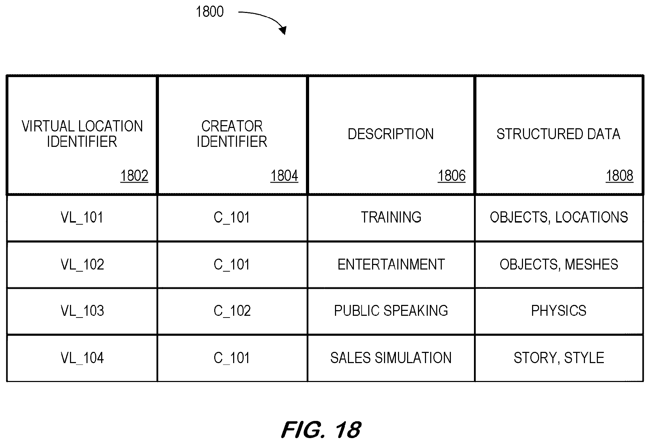

In some embodiments (such as the one shown in FIG. 17), the storage device 1730 further stores an immersive virtual location database 1800. An example of a database that may be used in connection with the platform 1700 will now be described in detail with respect to FIG. 18. Note that the database described herein is only one example, and additional and/or different information may be stored therein. Moreover, various databases might be split or combined in accordance with any of the embodiments described herein.

Referring to FIG. 18, a table is shown that represents the immersive virtual location database 1800 that may be stored at the platform 1700 according to some embodiments. The table may include, for example, entries identifying scenes that may be experienced. The table may also define fields 1802, 1804, 1806, 1808 for each of the entries. The fields 1802, 1804, 1806, 1808 may, according to some embodiments, specify: a virtual location identifier 1802, a creator identifier 1804, a description 1806, and structured data 1808. The immersive virtual location database 1800 may be created and updated, for example, when a creator generates a new locations, adjusts an existing location, *etc.*

The virtual location identifier 1802 might be a unique alphanumeric label that is associated with an interactive, immersive experience. The creator identifier 1804 may show who created the location. The description 1806 might indicate that the location is associated with training, education, public speaking, *etc.* The structured data 1808 may comprise object information, location details, meshes, physics rules, story goals, rendering styles, *etc.*

In this way, embodiments may be dynamic and adaptable (unlike prior solutions that are often hard-coded and inflexible). Generative AI models may be leveraged to create environments based on user-specific prompts, allowing for the generation of virtual spaces that are tailored to a user's specific needs and the situation at hand. This adaptability enhances the relevance and usability of the generated environments, providing a more personalized and immersive experience. Embodiments may also improve efficiency in the creation of virtual environments. Traditional methods can be time-consuming and resource-intensive, requiring significant manual effort to design and implement. In contrast, embodiments may automate the process and significantly reduce the time and resources required to create high-quality, immersive environments. Embodiments may also address the issue of shareability, a common limitation in existing solutions. The virtual environments may be easily shared among users (increasing their accessibility and usefulness). Further, embodiments may overcome real-world limitations (unlike traditional methods that are constrained by real-world physics) by enabling the creation of virtual environments that are not limited by such restrictions. This enables a broader range of possible scenarios and experiences.

The following illustrates various additional embodiments of the invention. These do not constitute a definition of all possible embodiments, and those skilled in the art will understand that the present invention is applicable to many other embodiments. Further, although the following embodiments are briefly described for clarity, those skilled in the art will understand how to make any changes, if necessary, to the above-described apparatus and methods to accommodate these and other embodiments and applications.

Although specific hardware and data configurations have been described herein, note that any number of other configurations may be provided in accordance with some embodiments of the present invention (*e.g.,* some of the information associated with the databases described herein may be combined or stored in external systems). Moreover, although some embodiments are focused on particular types of use cases, any of the embodiments described herein could be applied to other types of use cases.

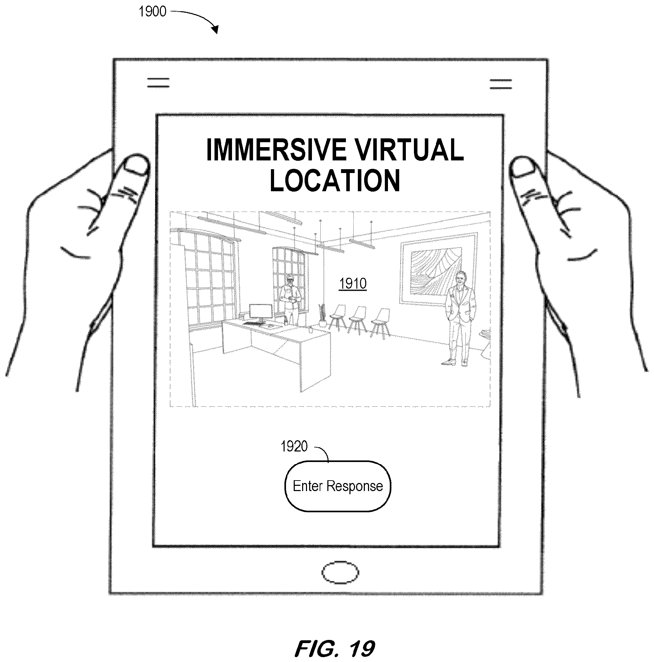

In addition, the displays shown herein are provided only as examples, and any other type of user interface could be implemented. For example, FIG. 19 illustrates a tablet computer 1900 providing an immersive virtual location display 1910 according to some embodiments. The immersive virtual location display 1910 might be used, for example, to train employees about new safety guidelines being implemented by an enterprise. A user may interact with the display 1910, such as by selecting an "Enter Response" text entry area 1920.

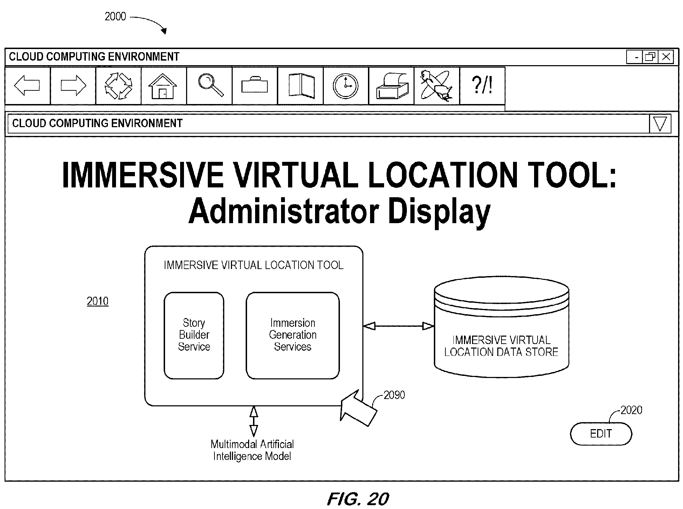

FIG. 20 is an operator or administrator display in accordance with some embodiments. The display 2000 includes a graphical representation 2010 of an immersive virtual location tool in accordance with any of the embodiments described herein. Selection of an element on the display 2000 (*e.g.,* via a touchscreen or computer pointer 2090) may result in display of a pop-up window containing more detailed information about that element and/or various options (*e.g.,* to define how an immersive virtual location tool interacts with an immersive experience framework, *etc.).* Selection of an "Edit" icon 2020 may also let an operator or administrator adjust the operation of the system (*e.g.,* to change mapping to a data store, adjust object properties, make changes to a virtual character, *etc.).*

The present invention has been described in terms of several embodiments solely for the purpose of illustration. Persons skilled in the art will recognize from this description that the invention is not limited to the embodiments described but may be practiced with modifications and alterations limited only by the spirit and scope of the appended claims.

## Claims

1. A system associated with an immersive experience framework, comprising:
an immersive virtual location data store that contains information about a plurality of three-dimensional scenes, each three-dimensional scene being associated with an immersive virtual location; and
an immersive virtual location tool, coupled to the immersive virtual location data store, including:
a computer processor, and
a computer memory storing instructions that when executed by the computer processor cause the immersive virtual location tool to:
receive, from a creator, an immersive virtual location request,
automatically create a request prompt based on the immersive virtual location request,
transmit the request prompt to a text-to-video generative artificial intelligence model,
receive, from the text-to-video generative artificial intelligence model, a video of a virtual location,
convert the video of the virtual location into a three-dimensional scene using a volume rendering technique,
store information about the three-dimensional scene in the immersive virtual location data store, and
arrange for a user to interact with the three-dimensional scene using a substantially real-time experience interaction engine.

2. The system of claim 1, wherein the request prompt is based on at least one of: (i) an environment description of the virtual location, and (ii) information inferred from a scenario.

3. The system of claim 1 or 2, wherein the immersive virtual location request further includes information about at least one of: (i) a room description, (ii) a physics description, (iii) a style suggestion, (iv) a user goal, and (v) a character in the virtual location; and/or
wherein the immersive virtual location request received from the creator is associated with at least one of: (i) a text request, (ii) an audio request, (iii) an image request, and (iv) a video request.

4. The system of any one of claims 1 to 3, wherein the text-to-video model comprises a text-to-image model followed by an image-to-video model; and/or
wherein the generative artificial intelligence model comprises a multimodal Large Language Model ("LLM").

5. The system of any one of claims 1 to 4, wherein the volume rendering technique is associated with Gaussian splatting,
wherein three-dimensional Gaussians are optionally converted into meshes enabling simulation physics.

6. The system of any one of claims 1 to 5, wherein the stored information about the three-dimensional scene includes a Java Script Object Notation ("JSON") file containing at least one of: (i) virtual environment locations, (ii) virtual environment dimensions, and (iii) virtual environment mesh references; and/or
wherein the immersive virtual location tool is associated with at least one of: (i) a personal soft skill training use case, (ii) a business skill use case, and (iii) an entertainment use case.

7. The system of any one of claims 1 to 6, wherein the information about the three-dimensional scene in the immersive virtual location data store is sharable with a plurality of creators; and/or
wherein the information about the three-dimensional scene in the immersive virtual location data store is sharable with a plurality of users.

8. The system of any one of claims 1 to 7, wherein the immersive virtual location tool dynamically refines the request prompt via interactions with the creator.

9. A computer-implemented method associated with an immersive experience framework, comprising:
receiving, by a computer processor of an immersive virtual location tool from a creator, an immersive virtual location request including an environment description of a virtual location;
automatically creating a request prompt based on the environment description;
dynamically refining the request prompt via interactions with the creator;
transmitting the request prompt to a Large Language Model ("LLM");
receiving, from the LLM, a structured scene description for the virtual location;
converting the structured scene description for the virtual location into a three-dimensional scene using a volume rendering technique associated with Gaussian splatting;
storing information about the three-dimensional scene in an immersive virtual location data store, wherein the immersive virtual location data store contains information about a plurality of three-dimensional scenes, each three-dimensional scene being associated with an immersive virtual location; and
arranging for a user to interact with the three-dimensional scene using a substantially real-time experience interaction engine.

10. The method of claim 9, wherein the immersive virtual location request further includes information about: (i) a room description, (ii) a physics description, (iii) a style suggestion, (iv) a user goal, and (v) a character in the virtual location; and/or
wherein the immersive virtual location request received from the creator is associated with at least one of: (i) a text request, (ii) an audio request, (iii) an image request, and (iv) a video request.

11. The method of claim 9 or 10, wherein three-dimensional Gaussians are converted into meshes enabling simulation physics.

12. The method of any one of claims 9 to 11, wherein the structured scene description comprises a Java Script Object Notation ("JSON") file containing at least one of: (i) virtual environment locations, (ii) virtual environment dimensions, and (iii) virtual environment mesh references.

13. One or more non-transitory computer-readable media storing computer-executable instructions that, when executed by a computing system, cause the computing system to perform operations comprising:
receiving, by a computer processor of an immersive virtual location tool from a creator, an immersive virtual location request including an environment description of a virtual location;
automatically creating a request prompt based on the environment description;
dynamically refining the request prompt via interactions with the creator;
transmitting the request prompt to a text-to-video Large Language Model ("LLM");
receiving, from the text-to-video LLM, a video of the virtual location;
converting the video of the virtual location into a three-dimensional scene using a volume rendering technique associated with Gaussian splatting;
storing information about the three-dimensional scene in an immersive virtual location data store, wherein the immersive virtual location data store contains information about a plurality of three-dimensional scenes, each three-dimensional scene being associated with an immersive virtual location; and
arranging for a user to interact with the three-dimensional scene using a substantially real-time experience interaction engine.

14. The media of claim 13, wherein the information about the three-dimensional scene in the immersive virtual location data store is sharable with a plurality of users.

15. The media of claim 13 or 14, wherein the immersive virtual location tool dynamically refines the request prompt via interactions with the creator.
